# EUROPÄISCHE PATENTANMELDUNG

(11) **EP 1 744 141 A2**
(43) Veröffentlichungstag der Anmeldung: **17.01.2007**
(21) Anmeldenummer: 06116417.4
(22) Anmeldetag: 30.06.2006
(51) Int. Cl.: G01M 11/00

(54) **Verfahren und Vorrichtung zur Prüfung eines Hohlfaserbündels**

(30) Priorität: 15.07.2005 DE 102005033061
(71) Anmelder: Asentics GmbH & Co. KG., 57078 Siegen (DE)
(72) Erfinder: Sondermann, Thomas, 57489, Drolshagen (DE); Krieger, Thomas, 57539, Bitzen Dünebusch (DE); Pomrehn, Wolfgang, 51674 Wiehl (DE)
(74) Vertreter: Selting, Günther

(57) **Zusammenfassung**

Um bei einem Hohltaserbündel (10) offene oder verschlossene Hohlfasern (30) zu detektieren, beinhaltet ein Verfahren zur Prüfung eines Hohlfaserbündels (10) die Schritte:
• Aufnehmen eines ersten Bildes (46) der Stirnseite (12) des Hohltaserbündels (10) als Lochbild, das die Löcher (43) der Hohlfaser-Stirnseiten (28) abbildet, und
• Detektieren der Löcher (43) in dem ersten Bild.

Ferner wird eine entsprechende Vorrichtung zur Prüfung eines Hohlfaserbündels (10) vorgeschlagen.

## Beschreibung

Die Erfindung betrifft ein Verfahren und eine Vorrichtung zur Prüfung eines Hohlfaserbündels.

Hohlfaserbündel finden beispielsweise Anwendung als Dialysefilter. Hohlfaser-Dialysefilter enthalten ein Bundel von einigen tausend Kapillaren, die an den Endbereichen von einer Vergussmasse haltend umschlossen sind. Im Allgemeinen besteht das Kapillarmaterial aus durchsichtigem Kunststoff. Zum Filtern von Blut bei der Dialyse strömt das Bltat daher von außen sichtbar durch die Kapillaren. Blutdurchströmte Kapillaren haben eine rote Färbung. Verschlossene Kapillaren sind nicht blutdurchströmt und nicht rot gefärbt. Sie behalten ihre ursprüngliche weiß erscheinende Färbung. Bei der Qualitätskontrolle von Hohlfaserbündeln ist es wichtig, zu ermitteln, welche Hohlfasern durchgängig sind und welche verschlossen sind.

Der Erfindung liegt die Aufgabe zugrunde, ein Verfahren und eine Vorrichtung zur Prüfung eines Hohlfaserbündels zu schaffen, mit der/dem offene oder verschlossene Hohlfasern des Bündels detektierbar sind.

Das erfindungsgemäße Verfahren ist definiert durch die Merkmale des Anspruchs 1. Die erfindungsgemäße Vorrichtung ist definiert durch die Merkmale des Anspruchs 11.

Das erfindungsgemäße Verfahren zur Prüfung eines Hohlfaserbündels beinhaltet die Schritte:
- Aufnehmen eines ersten Bildes der Stirnseite des Hohlfaserbündels als Lochbild, das die Löcher der Hohlfaser-Stirnseiten abbildet, und
- Detektieren der Löcher der Hohlfaser-Stirnseiten in dem ersten Bild.

Das Prüfen des Hohlfaserbündels erfolgt, ohne dass ein Durchfluss stattfindet. Die detektierten Löcher deuten auf offene Hohlfasern hin, so dass anhand der detektierten Löcher eine Aussage über die Qualität des Hohlfaserbündels gemacht werden kann. Beispielsweise kann nach Zählen der detektierten Löcher die Qualitätsaussage anhand der Lochanzahl gemacht werden. Bei bekannter Gesamtanzahl der Fasern des Hohlfaserbündels kann anhand der Anzahl detektierter Löcher auf die Anzahl verschlossener Hohlfasern geschlossen werden.

Vorzugsweise beinhaltet das Verfahren zusätzlich folgende Schritte:
- Aufnehmen eines zweiten Bildes der Stirnseite des Hohltaserbüridels als Faserbild, das die Lochränder der Hohlfaser-Stirnseiten abbildet, und
- Vergleichen des ersten Bildes mit dem zweiten Bild zur Detektion der Positionen von Hohlfasern mit verschlossener Stirnseite.

Hierbei werden zwei Bilder aufgenommen und miteinander verglichen, wobei das eine Bild nur die Löcher offener Hohlfaser-Stirnseiten und das andere Bild nur die Lochränder sowohl offener als auch geschlossener Hohlfaser-Stirnseiten abbildet. Aus dem Lochbild allein können verschlossene Hohlfasern nicht detektiert werden, weil das Lochbild nur offene nicht aber geschlossene Hohlfasern zeigt. Aus dem Faserbild allein können verschlossene Hohlfasern nicht ermittelt werden, weil das Faserbild die Lochränder sowohl offener als auch verschlossener Hohlfasern zeigt. Die Erfindung besteht darin, beide Bilder aufzunehmen und sie miteinander in Beziehung zu setzen" Bei dem Vergleich der beiden Bilder können die Positionen der Lochränder in dem Faserbild mit den Positionen der Löcher in dem Lochbild verglichen werden, wobei Positionen von Lochrändern, denen keine Position eines Lochs entspricht, auf eine Hohlfaser mit verschlossener Stirnseite hindeuten. Jedem detektierten Loch wird also ein detektierter Lochrand zugeordnet. Lochränder, denen kein Loch zugeordnet werden kann, werden als verschlossen bewertet.

Das Vergleichen der Bilder kann folgende Schritte enthalten:
- Bestimmen der Positionen von Löchern in dem ersten Bild, z. B. durch Schwellwertbildung der Pixelintensitäten,
- Bestimmen der Positionen von Lochrändern in dem zweiten Bild, z. B. durch Kantendetektion mit Hilfe eines Kantenfilters,
- Zuordnen der Positionen von Lochrändern in dem zweiten Bild, die jeweils die Position eines in dem ersten Bild gefundenen Loches umschließen, in eine erste Klasse, z. B. durch Verwendung eines herkömmlichen Klassifikationsverfahrens aus der Bildverarbeitung,
- Zuordnen der Positionen von Lochrändern in dem zweiten Bild, die jeweils nicht die Position eines in dem ersten Bild gefundenen Loches umschließen, in eine zweite Klasse, z. B. durch Verwendung eines herkömmlichen Klassifikationsverfahrens aus der Bildverarbeitung, und
- Ausgeben der Positionen der Lochränder, wobei die Lochrand-Positionen der ersten Klasse den Positionen von Hohlfasern mit offener Stirnseite und die Lochrand-Positionen der zweiten Klasse den Positionen von Hohlfasern mit verschlossener Stirnseite entsprechen.

Die Klassifikation dient dazu, die detektierten Hohlfasern auf ihren Öffnungszustand zu bewerten. Der ersten Klasse werden diejenigen Hohlfasern zugeordnet, die mit einer ausreichenden Wahrscheinlichkeit als durchgängig erkannt werden. Der zweiten Klasse werden die Hohlfasern zugeordnet, die mit einer ausreichenden Wahrscheinlichkeit als verschlossen erkannt werden. Wahlweise können die Lochrand-Positionen der ersten Klasse und/oder der zweiten Klasse ausgegeben werden.

Das Vergleichen der Bilder kann zusätzlich folgende Schritte enthalten:
- Erstellen eines korrigierten Faserbildes durch Markieren der Lochränder der ersten Klasse in dem zweiten Bild,
- erneutes Bestimmen der Positionen von nicht markierten Lochrändern in dem zweiten Bild, d. h. in dem korrigierten Faserbild,
- erneutes Zuordnen der Positionen von nicht markierten Lochrändern in dem zweiten Bild, die jeweils die Position eines in dem ersten Bild gefundenen Loches umschließen, in die erste Klasse und
- erneutes Zuordnen der Positionen von nicht markierten Lochrändern in dem zweiten Bild, die jeweils nicht die Position eines in dem ersten Bild gefundenen Loches umschließen, in die zweite Klasse.

Diese zusätzlichen Verfahrensschritte beschreiben einen Rückkopplungspfad. Bei der Rückkopplung werden bereits sicher erkannte Lochränder so markiert, dass in dem auf diese Weise korrigierten Faserbild bei einer nochmaligen Klassifikation durch den Faserklassifikator die Wahrscheinlichkeit, Bildstrukturen fälschlicherweise als Fasern zu erkennen, stark reduziert wird. Die zusätzlichen Schritte zum Vergleichen der Bilder können vor dem Ausgeben der Lochrand-Positionen einmal oder mehrmals durchgeführt werden, um die Fehlerwahrscheinlichkeit weiter zu reduzieren.

Die Hohlfaserbündel-Stirnseite kann zur Aufnahme des ersten Bildes, d. h. des Lochbildes, mit senkrecht einfallendem Licht befeuchtet werden. Das Licht wird von verschlossenen Hohlfaser-Stirnseiten reflektiert und aufgenommen. Durch offene Hohlfaser-Stirnseiten dringt das Licht in die Hohlfaser ein, ohne reflektiert zu werden. Die Löcher erscheinen in dem Lochbild als schwarze kreisrunde Bereiche.

Die Hohlfaserbündel-Stirnseite kann zur Aufnahme des zweiten Bildes, d. h. des Fascrbildes, mit schräg einfallendem Licht beleuchtet werden. Die Hohlfaserbündel-Stirnseite kann nach der Dunkelfeldmethode mit derart schräg einfallendem Licht beleuchtet werden, dass an den Lochrändern gestreutes Licht aufgenommen wird. An der Stirnseite reflektiertes Licht wird dann nicht aufgenommen. In einem solchen Faserbild erscheint die Hohlfaserbündel-Stirnseite dunkel mit hellen Lochrändern.

Die Hohlfaserbündel-Stirnseite kann zur Aufnahme des ersten und/oder des zweiten Bildes durch eine Blende, vorzugsweise durch eine Schlitzblende hindurch, beleuchtet werden. Die Hohlfaserbündel-Stirnseite wird dann nur von Licht des direkten Strahlengangs beleuchtet. Störendes indirektes Streulicht ist dann vermieden. Streulichteffekte reduzieren die Auflösung und die Qualität der aufgenommenen Bilder.

Die Bilder können zeilenweise mit einer Zeilenkamera aufgenommen werden. Eine Zeilenkamera ermöglicht eine hohe Auflösung und eine gute Qualität des aufgenommenen Bildes. Aufgrund der geringen abzubildenden Dimensionen der Hohlfaser-Stirnseiten wird eine hohe Bildauflösung und eine gute Bildqualität henötigt.

Die Hohlfaserbundel-Stirnseite kann zur Aufnahme des ersten Bildes mit farbigem Licht einer ersten Farbe und zur Aufnahme des zweiten Bildes mit farbigem Licht einer zweiten, von der ersten verschiedenen Farbe beleuchtet werden. Durch die verschiedenen Farben können die beiden Bilder gleichzeitig aufgenommen und später entsprechend der Farben getrennt werden. Die beiden Farben können zum Beispiel Komplementärfarben sein. Das Lochbild kann mit rotem Licht und das Faserbild mit grünem Licht aufgenommen werden. Die Wellenlänge des verwendeten Lichts kann auf die Reflexionseigenschaften der Fasern abgestimmt sein.

Die Bilder können zeitlich nacheinander oder gleichzeitig und in diesem Falle mit unterschiedlichem Licht aufgenommen werden, um sie nach gleichzeitiger Aufnahme getrennt weiterverarbeiten zu können.

Die erfindungsgemäße Vorrichtung zur Prüfung eines Hohlfaserbundels ist definiert durch die Merkmale des Anspruchs 12. Die Vorrichtung hat eine die Stirnseite des Hohlfaserbündels beleuchtende Lichtquelle, eine das an der Stirnseite reflektierte und/oder gestreute Licht in einem ersten Bild als Lochbild aufnehmende Kamera, wobei das Lochbild die Löcher der offenen Hohlfaser-Stirnseiten abbildet, und eine Bildverarbeitungseinrichtung zur Detektion der Löcher Die Vorrichtung kann eine Digitalisierungseinrichtung zum Digitalisieren der aufgenommenen Bilder eiithalten. Die Kamera kann zum Beispiel eine Digitalkamera sein.

Vorteilhafterweise ist die Kamera eine das an der Stirnseite des Hohlfaserbündels reflektierte Licht in einem zweiten Bild als Faserbild aufnehmende Kamera, wobei das Faserbild die Lochränder der Hohlfaserstirnseiten abbildet. In dem Fall kann eine Bildverarbeitungseinrichtung zur Detektion der Positionen von Hohlfasern mit verschlossener Stirnseite vorgesehen sein.

Die Bildverarbeitungseinrichtung kann einen ersten Detektor zum Bestimmen der Positionen von Löchern in dem ersten Bild, das heißt in dem Lochbild, enthalten. Sie kann einen zweiten Detektor zum Bestimmen der Positionen von Lochrändern in dem zweiten Bild, das heißt in dem Faserbild, enthalten. Sie kann einen Klassifikator zum Zuordnen der Lochrand-Positionen des zweiten Bildes in eine erste und in eine zweite Klasse und eine Signalausgabecinrichtung zum Ausgeben der Lochrand-Positionen enthalten. Der erste Detektor kann eine Einrichtung zur lokaladaptiven Schwellwertbildung und der zweite Detektor ein Kantenfifter enthalten. Die Ausgabeeinrichtung kann ein Signalausgang sein.

Die Bildverarbeitungseinrichtung kann eine Recheneinrichtung zum Erkennen der Lochränder der ersten Klasse in dem zweiten Bild und einen Rückkopplungspfad von dem Ausgang der Recheneinrichtung zu dem Eingang des zweiten Detektors enthalten. Die Recheneinrichtung kann ein Subtrahierer sein, der zum Beispiel durch Subtraktion der Pixelintensitäten der Lochränder diese aus dem Bild entfernt und so ein korrigiertes Faserbild erstellt, Das korrigierte Faserbild wird über den Rückkopplungspfad von dem Ausgang der Recheneinrichtung auf den Eingang des zweiten Detektors zur erneuten Lochranddetektion gegeben. Eine erneute Lochranddetektion reduziert die Wahrscheinlichkeit von falsch detektierten offenen Hohlfaser-Stirnseiten, die durch Mehrdeutigkeiten bei der Klassifikation und eine damit verbundene Fehlklassifikation hervorgerufen werden kann. Die Recheneinrichtung und der Rückkopplungspfad erhöhen die Wahrscheinlichkeit, dass die detektierten offenen und verschlossenen Stirnseiten tatsächlich offenen und verschlossenen Hohlfaser-Stirnseiten entsprechen. Die Rückkopplung des korrigierten Faserbildes kann einmal oder mehrfach durchgeführt werden.

Eine erste Lichtquelle kann zur senkrechten Beleuchtung der Stirnseite des Hohlfaserbündels für die Aufnahme des ersten Bildes vorgesehen sein. Eine zweite Lichtquelle kann zur schrägen Dunkelfeldbeleuchtung der Stirnseite des Hohlfaserbündels für die Aufnahme des zweiten Bildes vorgesehen sein. Durch senkrechte Beleuchtung der Hohlfaserbündel-Stirnseite erscheinen verschlossene, das auftreffende Licht reflektierende Hohlfaser-Stirnseiten in dem Lochbild hell und offene, das auftreffende Licht nicht reflektierende Hohlfaser-Stirnseiten in dem Lochbild dunkel. Durch eine schräge Dunkelfeldbeleuchtung wird an den Lochrändern der Hohlfaser-Stirnseiten gebeugtes und/oder gestreutes Licht aufgenommen. In dem Faserbild erscheinen die Lochränder hell. An der Hohlfaserbündel-Stirnseite und an verschlossenen Hohlfaser-Stirnseiten reflektiertes Licht sowie durch offene Hohlfaser-Stirnseiten in die Hohlfasern eindringendes Licht wird nicht aufgenommen. Diese Bereiche erscheinen in dem Faserbild dunkel.

Die erste Lichtquelle kann farbiges Licht einer ersten Farbe erzeugen und die zweite Lichtquelle kann farbiges Licht einer zweiten, von der ersten verschiedenen Farbe, erzeugen. Durch die verschiedenen Farben sind das Lochbild und das Faserbild von der Bildverarbeitungseinrichtung besser vergleichbar. Die beiden Farben können insbesondere Komplementärfarben sein. Das Licht zur Aufnahme des Lochbildes kann rot und das Licht zur Aufnahme des Faserbildes kann grün sein. Die Wellenlänge des von den Lichtquellen ausgesandten Lichts kann auf die Reflexionseigenschaften der Hohlfasern abgestimmt sein.

Zwischen der Lichtquelle und dem Hohlfaserbündel kann ein Blende, vorzugsweise eine Schlitzblende, angeordnet sein. Die Blende kann derart angeordnet sein, dass das von der Lichtquelle ausgesandte Licht durch die Blende auf die Hohlfaserbündel-Stirnseite und/oder das an der Hohlfaserbündel-Stirnseite reflektierte und/oder gestreute Licht durch die Blende auf das Objektiv der Kamera trifft. Dadurch sind Streulichteffekte reduziert, durch die die Auflösung und die Qualität des aufgenommenen Bildes verschlechtert würden.

Die Kamera kann eine Zeilenkamera sein. Die Zeilenkamera kann zur Erhöhung der Auflösung und Qualität des aufgenommenen Bildes ein hohes Auflösungsvermögen haben. Eine hohe Auflösung und eine hohe Qualität des aufgenommenen Bildes wird aufgrund der geringen abzubildenden Dimensionen der Hohlfasern benötigt.

Im Folgenden wird anhand der Figuren ein Ausführungsbeispiel der Erfindung näher ehäutert.

Es zeigen.
- Fig. 1: einen seitlichen Schnitt durch das Hohlfaserbündel mit schematischer Darstellung des Lichts zur Aufnahme des Lochbildes,
- Fig. 2: eine schematische Darstellung der erfindungsgemäßen Vorrichtung,
- Fig. 3: einen seitlichen Schnitt durch das Hohlfaserbündel mit schematischer Darstellung des Lichts zur Aufnahme des Faserbildes,
- Fig. 4: eine schematische Darstellung eines Faserbildes,
- Fig. 5: eine schematische Darstellung eines Lochbildes, und
- Fig. 6: ein Flussdiagramm der Bildverarbeitungseinrichtung.

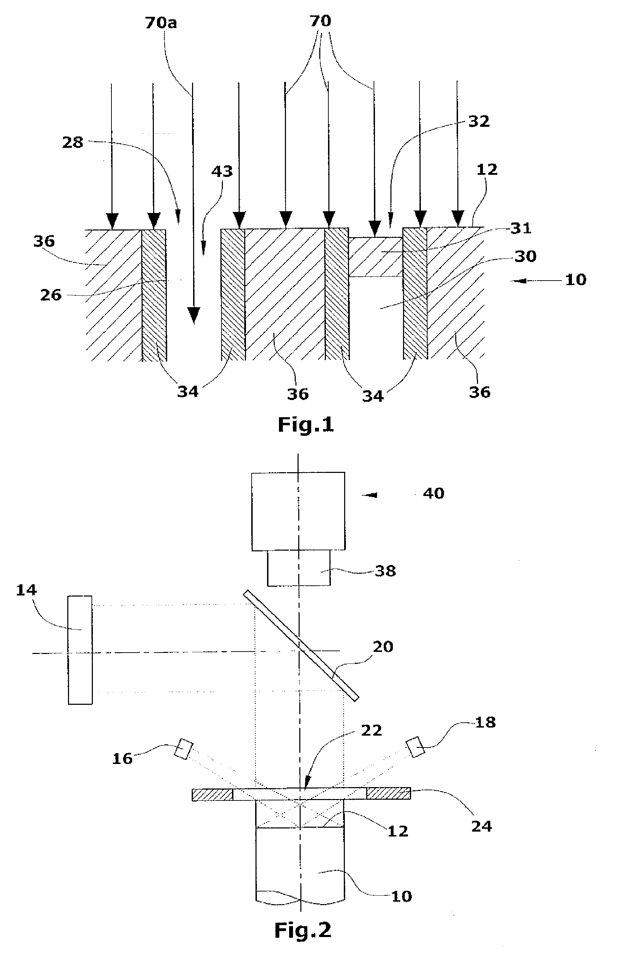

Fig. 1 zeigt einen seitlichen Schnitt durch ein Hohltaserbündel 10 eines Dialysefilters. Das Hohlfaserbündel 10 enthält als Hohlfasern Kapillare 26 mit offener Stirnseite 28 und Kapillare 30 mit von einem Pfropf 31 verschlossener Stirnseite 32. Die Hohlfasern 26,30 haben jeweils eine zylindrische Kapillarwand 34. Die Kapillarwände 34 des Hohlfaserbundels 10 sind außen von einer Vergussmasse 36 fest umschlossen und gehalten. Der Pfropf 31 kann zum Beispiel von in die Hohlfaser 30 gelangter Vergussmasse gebildet sein.

Um bei der Qualitätskontrolle der Hohlfaserbündel zu ermitteln, welche der Hohlfasern verschlossen sind, dient die Vorrichtung nach Fig. 2:

Gemäß Fig. 2 wird die Stirnseite 12 des Hohlfaserbündels 10 bei der gleichzeitigen Aufnahme des Lochbildes und des Faserbildes von Lichtquellen 14, 16, 18 beleuchtet. Die Lichtquelle 14 sendet rotes Licht aus, das von einem halbdurchlässigen Spiegel 20 zumindest teilweise unter einem Winkel von 90 Grad auf die HohlfaserbUndel-Stirnseite 12 reflektiert wird und durch die Blendenöffnung 22 einer Schlitzblende 24 hindurch auf die Stirnseite 12 trifft.

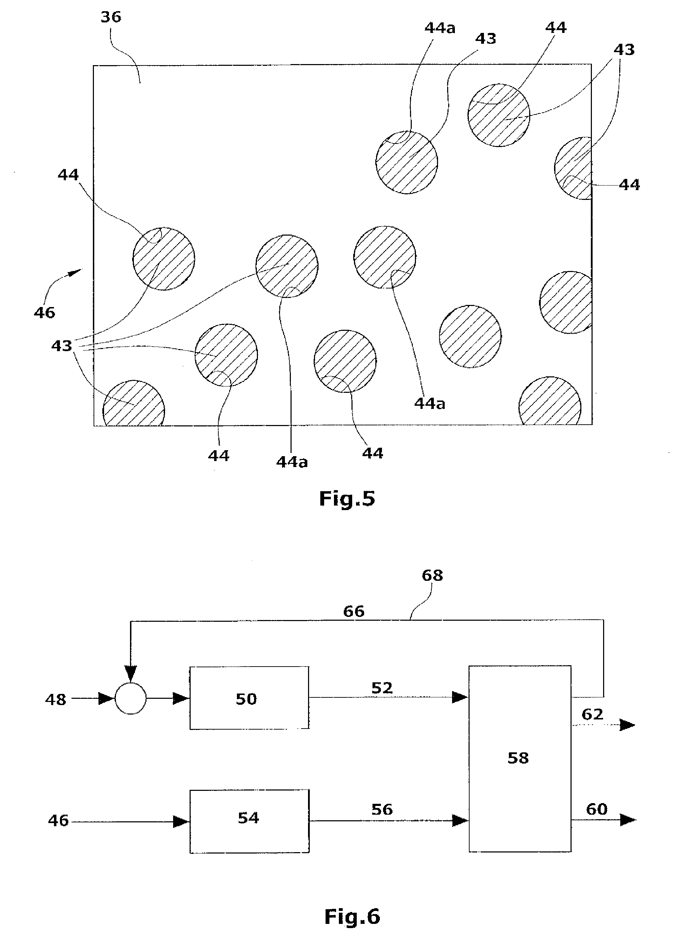

Das Licht 70 der Lichtquelle 14 trifft als Auflicht wie in Fig. 1 gezeigt senkrecht auf die Hohlfaserbündel-Stirnseite 12. Hierbei ist telezentrisches Auflicht vorteilhaft. Das im Bereich der Vergussmasse 36, der Kapillarwände 34 und der verschlossenen Hohlfaser-Stirnseite 32 auf die Hohlfaserbündel-Stirnseite 12 auftreffende Licht 70 wird reflektiert. Das im Bereich einer offenen Hohlfaser-Stirnseite 28 auftreffende Licht 70a dringt in die Hohlfaser 26 ein und wird nicht an der Stirnseite 12 reflektiert. Das reflektierte Licht trifft gemäß Fig. 2 durch die Blendenöffnung 22 und den halbdurchlässigen Spiegel 20 hindurch auf das Objektiv 38 einer digitalen Zeilenkamera 40 und wird von der Kamera 40 als Lochbild 46 aufgenommen, das offene Hohlfaser-Stirnseiten 28 als dunkle kreisrunde Bereiche in heller Umgebung darstellt. Das Lochbild 46 ist in Fig. 5 dargestellt.

Zur gleichzeitigen Aufnahme des Faserbildes 48 wird die Hohlfaserbündel-Stirnseite 12 gemäß Fig. 2 von den Lichtquellen 16, 18 mit grünem, schräg auftreffendem Licht nach der Dunkelfeldmethode beleuchtet. Zwei schräg gegeneinander gerichtete Lichtquellen 16, 18 ermöglichen eine gleichmäßigere Auslcuchtung der Lochränder 44 und somit eine gleichmäßigere Abbildung der Lochränder.

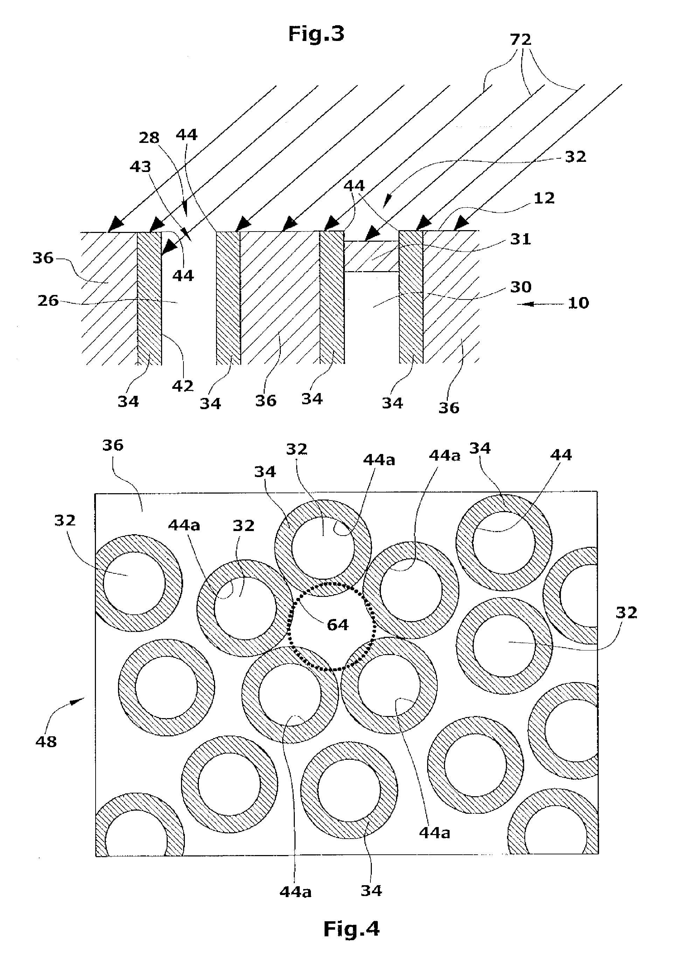

Das Licht der Lichtquellen 16, 18 trifft durch die Blendenöffnung 22 der Schlitzblende 24 hindurch schräg auf die Hohlfaserbündel-Stirnseite 12. Fig. 3 zeigt das von der Lichtquelle 18 ausgesandte, schräg auf die Hohlfaserbündel-Stirnseite 12 auftreffende Licht 72. Das im Bereich der Vergussmasse 36, der Kapillarwände 34 und der verschlossenen Hohlfaser-Stirnseite 32 auf die Hohifaserbündel-Stirnseite 12 auftreffende Licht 72 wird unter einem derartigen Winkel reflektiert, dass das reflektierte Licht nicht auf das Kameraobjektiv trifft. An der Stirnseite 12 gestreutes Licht wird von der Schlitzblende 24 zurückgehalten und trifft ebenfalls nicht auf das Kameraobjektiv 38. Licht der Lichtquellen 16, 18, das durch die offene Hohlfaser-Stirnseite 28 auf die Innenseite 42 der Kapillarwand 34 trifft und an der Innenseite 42 reflektiert wird, trifft ebenfalls nicht auf das Kameraobjektiv 38. Lediglich an den Lochrändern 44 der Kapillarwände 34 im Bereich der Hohlfaserbündel-Stirnseite 12 gestreutes Licht trifft durch die Blendenöffnung 22 der Schlitzblende 24 auf das Kameraobjektiv 38 und erzeugt das Faserbild 48. In diesem Faserbild 48 erscheinen die Lochränder 44 der Hohlfasern 26, 30 mit offener 28 und geschlossener Stirnseite 32 als helle Ringe oder Ringausschnitte in dunkler Umgebung. Das Faserbild 48 ist in Fig. 4 dargestellt.

Das Lochbild 46 nach Fig. 5 zeigt die Löcher 43 offener Hohlfaser-Stirnseiten 28 und das Faserbild 48 nach Fig. 4 zeigt die Lochränder 44 sowohl offener Hohifaser-Stirnseiten 28 als auch geschlossener Hohlfaser-Stirnseiten 32. Beide Figuren zeigen das selbe Faserbild bzw. Lochbild der Faserkonfiguration derselben Fasern, das heißt, es handelt sich in beiden Bildern um die Darstellung derselben Faserkonfiguration desselben Faserbündels. Die nachfolgend anhand der Figuren 4 bis 6 beschriebene Bildverarbeitung ermittelt in dem Faserbild 48 die Positionen potentieller Hohlfasern. In dem Lochbild 46 werden die Positionen offener Hohlfasern 26 ermittelt und anschließend die zugehörigen Lochränder 44 aus dem Faserbild 48 entfernt. Dieses korrigierte Faserbild 66 wird zur erneuten Ermittlung potentieller Hohlfasern rückgekoppelt und anschließend erneut mit dem Lochbild 46 verglichen, Durch ein solches iteratives Verfahren werden Fehlklassifikationen durch mehrdeutige Faseranordnungen oder Verzerrungen unterdrückt.

Die Bifdverarbeitung wird im Folgenden näher erläutert:
Fig. 6 zeigt schematisch den Ablauf bei der Verarbeitung des digitalen Lochbildes 46 und des digitalen Faserbildes 48. In dem Faserbild 48 werden mit einem Filter 50 die Positionen 52 der Lochränder 44 bestimmt. Das Filter kann zum Beispiel ein Kantenfilter sein. In dem Lochbild 46 werden mit Hilfe einer lokaladaptiven Schwellwertbildung 54 die Positionen 56 der Löcher 43 bestimmt. Die Lochrand-Positionen 52 und die Lochpositionen 56 werden mit einem Klassifikator 58 klassifiziert, wobei die Positionen 52 und 56 miteinander verglichen werden. Lochrand-Positionen 52, denen Lochpositionen 56 entsprechen, werden einer ersten Klasse 60 für mit hoher Wahrscheinlichkeit sicher detektierten offenen Fasern 26 zugeteilt. Lochrandpositionen 52, denen keine Lochpositionen 56 entsprechen, werden einer zweiten Klasse 62 für geschlossene Hohlfasern 30 zugeteilt, wobei den Positionen 52 der zweiten Klasse 62 ein Klassifikationsfehler aufgrund von Mehrdeutigkeiten zugrunde liegen kann.
Fig. 4 verdeutlicht die Entstehung derartiger Fehlklassifikationen aufgrund von Mehrdeutigkeiten. In dem gezeigten Faserbild 48 sind fünf Lochränder 44a von Hohlfaser-Stirnseiten derart in einem Kreis angeordnet, dass das Klassifikationsverfahren den als punktierte Linie dargestellten Kreisring 64 als Lochrand erkennt. Der Klassifikator 58 würde bei dem Vergleich des Faserbildes 48 mit dem Lochbild 46 dem Kreisring 64 keine Lochposition 56 in dem Lochbild 46 zuordnen können und den Kreisring 64 somit als Lochrand 44 einer geschlossenen Hohlfaser-Stirnseite klassifizieren und der zweiten Klasse 62 zuordnen.

Um die Gefahr derartiger Fehlklassifikationen zu reduzieren, werden die Lochränder der ersten Klasse 60, das heißt die als sicher detektiert definierten Lochrand-Positionen 52 offener Fasern 26, in dem Faserbild 48 markiert. Auf diese Weise wird ein korrigiertes Faserbild 66 erstellt, das über den Rückkopplungspfad 68 gemäß Fig. 6 von dem Ausgang des Klassifikators 58 auf den Eingang des Kantenfilters 50 gegeben wird. Die Lochrand-Positionen werden mit dem Klassifikator 58 erneut klassifiziert und entsprechend der ersten Klasse 60 für offene Hohlfaser-Stirnseiten bzw. der zweiten Klasse 62 für geschlossene Hohlfaser-Stirnseiten zugeteilt. Bei der erneuten Klassifikation werden nur die nicht markierten, noch unklassifizierten Lochränder berücksichtigt. Weil das korrigierte Faserbild 66 bei der erneuten Klassifikation weniger noch unklassifizierte Lochränder enthält, als bei der ersten Klassifikation, ist die Gefahr reduziert, dass benachbarte Lochränder derart zum Beispiel in einem Kreis gemäß Fig. 4 angeordnet sind, dass bei der Lochranddetektion ein nicht einem Lochrand entsprechender Kreisring 64 detektiert wird. Die Gefahr von Mehrdeutigkeiten bei der Lochranddetektion ist also reduziert. Dadurch ist die Gefahr entsprechender Fehlklassifikationen bei der Klassifikation der detektierten Lochränder reduziert. Die zweite Klasse 62 enthält dann mit höherer Wahrscheinlichkeit sicher detektierte Lochrand-Positionen 52 geschlossener Hohlfaser-Stirnseiten 32. Durch Ausgabe der Lochrand-Positionen der Klasse 62 für geschlossene Hohlfaser-Stirnseiten 32 können anschließend die geschlossenen Hohlfasern 30 bestimmt werden.

## Patentansprüche

1. Verfahren zur Prüfung eines Hohlfaserbündels (10), mit den Schritten:
• Aufnehmen eines ersten Bildes (46) der Stirnseite (12) des Hohlfaserbüdels (10) als Lochbild, das die Löcher (43) der Hohlfaser-Stirnseiten (28) abbildet, und
• Detektieren der Löcher (43) der Hohlfaser-Stirnseiten (28) in dem ersten Bild (46).

2. Verfahren nach Anspruch 1, **gekennzeichnet durch** die zusätzlichen Schritte:
• Aufnehmen eines zweiten Bildes (48) der Stirnseite (12) des Hohlfaserbündels (10) als Faserbild, das die Lochränder (44) der Hohlfaser-Stirnseiten (28, 32) abbildet, und
• Vergleichen des ersten Bildes (46) mit dem zweiten Bild (48) zur Detektion der Positionen von Hohlfasern (30) mit verschlossener Stirnseite (32).

3. Verfahren nach Anspruch 2, **dadurch gekennzeichnet, dass** das Vergleichen der Bilder (46, 48) folgende Schritte enthält:
• Bestimmen der Positionen (56) von Löchern (43) in dem ersten Bild (46),
• Bestimmen der Positionen (52) von Lochrändern (44) in dem zweiten Bild (48),
• Zuordnen der Positionen (52) von Lochrändern (44) in dem zweiten Bild (48), die jeweils die Position (56) eines in dem ersten Bild (46) gefundenen Loches (43) umschließen, in eine erste Klasse (62),
• Zuordnen der Positionen (52) von Lochrändern (44) in dem zweiten Bild (48), die jeweils nicht die Position (56) eines in dem ersten Bild (46) gefundenen Loches (43) umschließen, in eine zweite Klasse (60) und
• Ausgeben der Positionen (52) der Lochränder (44), wobei die Lochrand-Positionen (52) der ersten Klasse (62) den Positionen von Hohlfasern (26) mit offener Stirnseite (28) und die Lochrand-Positionen (52) der zweiten Klasse (60) den Positionen von Hohlfasern (30) mit verschlossener Stirnseite (32) entsprechen.

4. Verfahren nach Anspruch 3, **dadurch gekennzeichnet, dass** das Vergleichen der Bilder (46, 48) zusätzlich folgende Schritte enthält:
• Erstellen eines korrigierten Faserbildes (66) durch Markieren der Lochränder (44) der ersten Klasse (62) in dem zweiten Bild (48),
• erneutes Bestimmen der Positionen (52) von nicht markierten Lochrändern (44) in dem zweiten Bild (48),
• erneutes Zuordnen der Positionen (52) von nicht markierten Lochrändern (44) in dem zweiten Bild (48), die jeweils die Position (56) eines in dem ersten Bild (46) gefundenen Loches (43) umschließen, in die erste Klasse (62) und
• erneutes Zuordnen der Positionen (52) von nicht markierten Lochrändern (44) in dem zweiten Bild (48), die jeweils nicht die Position (56) eines in dem ersten Bild (46) gefundenen Loches (43) umschließen, in die zweite Klasse (60).

5. Verfahren nach einem der Ansprüche 1 bis 4, **dadurch gekennzeichnet, dass** die Hohlfaserbündel-Stirnseite (12) zur Aufnahme des ersten Bildes (46) mit senkrecht einfallendem Licht (70) beleuchtet wird.

6. Verfahren nach einem der Ansprüche 2 bis 5, **dadurch gekennzeichnet, dass** die Hohlfaserbündel-Stirnseite (12) zur Aufnahme des zweiten Bildes (48) mit schräg einfallendem Licht (72) beleuchtet wird.

7. Verfahren nach einem der Ansprüche 1 bis 6, **dadurch gekennzeichnet, dass** die Hohlfaserbündel-Stirnseite (12) zur Aufnahme des ersten (46) und/oder des zweiten Bildes (48) durch eine Blende (24) hindurch beleuchtet wird.

8. Verfahren nach einem der Ansprüche 1 bis 7, **dadurch gekennzeichnet, dass** das erste (46) und/oder das zweite Bild (48) zeilenweise mit einer Zeilenkamera (40) aufgenommen werden.

9. Verfahren nach einem der Ansprüche 2 bis 8, **dadurch gekennzeichnet, dass** die Hohlfaserbündel-Stirnseite (12) zur Aufnahme des ersten Bildes (46) mit farbigem Licht (70) einer ersten Farbe und zur Aufnahme des zweiten Bildes (48) mit farbigem Licht (72) einer zweiten, von der ersten verschiedenen Farbe beleuchtet wird.

10. Verfahren nach einem der Ansprüche 2 bis 9, **dadurch gekennzeichnet, dass** die Bilder (46, 48) zeitlich nacheinander aufgenommen werden.

11. Verfahren nach einem der Ansprüche 2 bis 10, **dadurch gekennzeichnet, dass** die Bilder (46, 48) gleichzeitig und mit unterschiedlichem Licht (70, 72) aufgenommen werden.

12. Vorrichtung zur Prüfung eines Hohlfaserbundels (10), mit einer die Stirnseite (12) des Hohlfaserbtindels (10) beleuchtenden Lichtquelle (14, 16, 18), einer das an der Stirnseite (12) reflektierte Licht (70, 72) in einem ersten Bild (46) als Lochbild aufnehmenden Kamera (40), wobei das Lochbild (46) die Löcher (43) der offenen Hohlfaser-Stirnseite (28) abbildet, und mit einer Bildverarbeitungseinrichtung zur Detektion der Löcher (43).

13. Vorrichtung nach Anspruch 12, **dadurch gekennzeichnet, dass** die Kamera (40) das an der Stirnseite (12) reflektierte Licht (70, 72) in einem zweiten Bild (48) als Faserbild aufnimmt, wobei das Faserbild (48) die Lochränder (44) der Hohlfaser-Stirnseiten (28, 32) abbildet, und dass eine Bildverarbeitungseinrichtung zur Detektion der Positionen von Hohlfasern (30) mit verschlossener Stirnseite (32) vorgesehen ist.

14. Vorrichtung nach Anspruch 13, **dadurch gekennzeichnet, dass** die Bildverarbeitungseinrichtung einen ersten Detektor (54) zum Bestimmen der Positionen (56) von Löchern (43) in dem ersten Bild (46), einen zweiten Detektor (50) zum Bestimmen der Positionen (52) von Lochrändern (44) in dem zweiten Bild (48), einen Klassifikator (58) zum Zuordnen der Lochrand-Positionen (52) des zweiten Bildes (48) in eine erste (62) und in eine zweite Klasse (60) und eine Ausgabeeinrichtung zum Ausgeben der Lochrand-Positionen (52) enthält.

15. Vorrichtung nach Anspruch 13 oder 14, **dadurch gekennzeichnet, dass** die Bildverarbeitungseinrichtung eine Recheneinrichtung (58) zum Erkennen der Lochränder (44) der ersten Klasse (62) in dem zweiten Bild (48) und einen Rückkopplungspfad (68) von dem Ausgang der Recheneinrichtung (58) zu dem Eingang des zweiten Detektors (50) enthält.

16. Vorrichtung nach einem der Ansprüche 12 bis 15, **dadurch gekennzeichnet, dass** eine erste Lichtquelle (14) zur senkrechten Beleuchtung der Stirnseite (1.2) des Hohlfaserbündels (10) für die Aufnahme des ersten Bildes (46) und/oder eine zweite Lichtquelle (16, 18) zur schrägen Dunkelfeldbeleuchtung der Stirnseite (12) des Hohlfaserbündels (10) für die Aufnahme des zweiten Bildes (48) vorgesehen ist.

17. Vorrichtung nach Anspruch 16, **dadurch gekennzeichnet, dass** die erste Lichtquelle (14) farbiges Licht (70) einer ersten Farbe erzeugt, und dass die zweite Lichtquelle (16, 18) farbiges Licht (72) einer zweiten, von der ersten verschiedenen Farbe erzeugt.

18. Vorrichtung nach einem der Ansprüche 12 bis 17, **dadurch gekennzeichnet, dass** zwischen der Lichtquelle (14, 16, 18) und dem Hohlfaserbündel (10) eine Blende (24) angeordnet ist.

19. Vorrichtung nach einem der Ansprüche 12 bis 18, **dadurch gekennzeichnet, dass** die Kamera (40) eine Zeilenkamera ist.
